## Europäisches Patentamt
## European Patent Office
## Office européen des brevets

(11) Publication number: **0 047 634**
A1

(12) # EUROPEAN PATENT APPLICATION

(21) Application number: 81304026.8

(51) Int. Cl.³: **C 08 L 23/10**

(22) Date of filing: **03.09.81**

---

(30) Priority: **04.09.80 JP 121730/80**

(43) Date of publication of application: **17.03.82 Bulletin 82/11**

(84) Designated Contracting States: **DE FR GB**

(71) Applicant: **MITSUI TOATSU CHEMICALS, INCORPORATED, 2-5 3-chome Kasumigaseki, Chiyoda-Ku Tokyo 100 (JP)**

(72) Inventor: **Hosonuma, Sin, No. 217, Taishogane 1-chome Narumi-cho Midori-ku, Nagoya-City Aichi-Prefecture (JP)**
Inventor: **Kawano, Akira, No. 5, Takiharu-cho Minami-ku, Nagoya-City Aichi-Prefecture (JP)**
Inventor: **Makiguchi, Hiroshi, No. 43-1 Shukuchi Narumi-cho Midori-ku, Nagoya-City Aichi-Prefecture (JP)**

(74) Representative: **Armitage, Ian Michael et al, MEWBURN ELLIS & CO. 2/3 Cursitor Street, London EC4A 1BQ (GB)**

(54) **Self-tacking wrap film.**

(57) This invention relates to a self-tacking wrap film made from polypropylene resin composition as the main material, and whose residue of extraction with n-heptane is from 95 wt% to 30 wt%. This self-tacking wrap film of the present invention is suitable for use in the electric microwave oven. At least one additive such as surfactant, nucleating agent, polyethylene and other property improving material can be included in order to prevent blocking, and to improve cutting.

EP 0 047 634 A1

0047634

## SELF-TACKING WRAP FILM

The present invention relates to self-tacking wrap film which is made of polypropylene composition, and more specifically, to self-tacking wrap film suitable for use in electric microwave ovens.

In general, self-tacking wrap film is used for airtight wrapping of foods in homes, food shops, hotels and so on, for moisture-proof wrapping of foods in the refrigerator or the electric microwave oven, and for keeping out objectionable smells and scents, and for keeping foods free from dust or the like in food shops.

As a result of the popularization of the electric microwave ovens in recent years, self-tacking wrap film has spread to its use for wrapping foods on a tray or the like. Generally the tray is made of clay or glass, to prevent vapourization of moisture from the foodstuff and the release of smells in the elctric microwave oven.

The self-tacking wrap film which is thus used must have the property of tackiness with the tray and with the film itself, and also the property of low shrinkage from the heat of the electric microwave oven and non-melting and non-whitening from the heat.

In conventional self-tacking wrap film, it is well known that the main materials are polyvinylidene-chloride, polyethylene or polyvinyl chloride. However, there are inherent disadvantages to their use. Film made of polyvinylidene-chloride has the disadvantage of large shrinkage on heating. Film made of polyethylene the disadvantage of melting if in contact with oil (used in fried meat or fish) and heated to a high temperature. Furthermore, film made of polyvinyl chloride loses utility by whitening if it touches boiling water.

Hence, of those conventional self-tacking wrap films, each film has a disadvantage for use in the electric microwave oven.

It is an object of the present invention to provide a self-tacking wrap film which has better properties for use in an electric microwave oven.

Other merits of the present invention will become apparent from the following detailed description.

According to the present invention the film is produced from a polypropylene resin composition whose residue of extraction with n-heptane is from 95 wt% to 30 wt%.

The present invention will now be described in more detail. The polypropylene composition of the present invention, is mainly a polymer of propylene, and may include a copolymer of one or more α-olefines (for example, ethylene, butene, hexene and so on).

In the present specification, the residue of extraction with n-heptane is the value referred to as the Isotactic Index, used in the field of polypropylene. It is the value which is indicated by ratio between the whole weight of film before extraction and the weight of dried film that is left after boiling in n-heptane for 24 hours in a Soxhlet extractor. The extracted part is mainly atactic polypropylene, but it is not limited to that and may contain other hydrocarbons, rosin, petroleum resin and so on.

In the present specification, if the value of residue of extraction with n-heptane is larger than 95 wt%, that is the value of the extracted part is less than 5 wt%, the tackiness or adhesiveness of the film to the tray (made of clay or glass) and to itself is weak. On the other hand, if the value of residue of extraction with n-heptane is less than 30 wt%, that is the extracted part is more than 70 wt%, the film is too soft, and when the temperature as measured in the electric microwave oven test described in the Examples below is $100^{\circ}C$ or less, the film is considered unsuitable for electric microwave oven use, In order to obtain the good applicability for electric microwave oven use, the film processing production is made from polypropylene resin composition in which the residue of extraction with n-heptane is preferably from 90 wt% to 60 wt%.

Polypropylene resin composition which is used in the present invention, and which the residue of extraction with n-heptane is from 95 wt% to 30 wt%, is prepared by adding, if necessary, at least one additive selected from atactic polypropylene, petroleum resin, rosin and other olefines to polypropylene resin homopolymer or random copolymer or mixture thereof. Good results are obtained when the extracted part with n-heptane is more than 5 wt% or less than 70 wt%.

It can also contain conventional additives used in the film processing art. For example, antioxidant, stabilizer, anti-blocking agents and antistatic additives may be incorporated into the polypropylene resin composition as required. Lubricants are not suitable as they tend to reduce the property of self-tackiness.

Self-tacking wrap film gives rise to the blocking phenomenon because transparency and self-tackiness are required for the film. Blocking occurs when the film is wound around a cardboard tube, and the film has a tendency of tacking with itself so that it is difficult to peel it away. In the present invention, the composition may contain a surfactant for improving this property of the material in the production of the polypropylene resin composition or in the film production.

In the present invention, it is preferred to use a surfactant such as:
glyceryl fatty acid (having from 8 to 22 carbon atoms) ester,
sorbitan fatty acid ($C_8 - C_{22}$) ester,
propylene glycol fatty acid ($C_8 - C_{22}$) ester,

saccharose fatty acid ($C_8 - C_{22}$) ester,

citric acid mono(di- or tri-) stearic acid ester, poly glycerol fatty acid ($C_8 - C_{18}$) ester,

penta erythritol fatty acid ($C_8 - C_{18}$) ester,

polyoxyethylene(20) glyceryl fatty acid ($C_{12} - C_{18}$) ester,

polyoxyethylene(20) sorbitan fatty acid ($C_{12} - C_{18}$) ester,

polyethyleneglycol fatty acid ($C_8 - C_{22}$) ester,

polypropylene glycol fatty acid ($C_8 - C_{18}$) ester,

polyoxyethylene (9, 5) dodecyl ether, polyoxyethylene (4-14, 30-50) alkyl ($C_{4, 9, 12}$) phenyl ether,

N, N-bis (2-hydroxy ethyl) fatty acid ($C_{12} - C_{18}$) amine,

fatty acid ($C_{12} - C_{18}$) amine,

condensation products of fatty acid ($C_{12} - C_{18}$) and
di-ethanolamine,

polyoxypropylene-polyoxyethylene block copolymer, polyethyleneglycol (molecular weight from 200 to 9,500),

polypropylene glycol,

alkyl ($C_{10} - C_{20}$) sulfonate (Na, K, $NH_4$) salt,

alkyl ($C_9 - C_{20}$) benzenesulfonate (Na, K, $NH_4$) salt,

alkyl naphthalene sulfonate (Na) salt, sodium dialkyl ($C_{4, 5, 6, 8, 13}$) sulfo sacynate,

alkyl ($C_{10} - C_{20}$) sulfate (Na, K, $NH_4$) salt,

potassium stearate,

N-acyl ($C_8 - C_{18}$) sarcosinate, and the like.

In conventional usage, a compound from the fatty acid amide group is used for hindering blocking, but in the present invention, it may not be possible to use such amides in film production to inhibit self-tackiness.

In the present invention, the following techniques can be employed in order to improve the cutting property of film. The polypropylene resin composition may contain a property improving material known as a nucleating agent or agent for accelerating crystallization. It increases the temperature of crystallization by more than $2^\circ$C.

The following description concerns the improved cutting property of the film. Generally, the temperature of crystallization is measured by Differential Thermal Analysis, and Differential Scanning Calorimetry. The temperature of crystallization in the present invention was measured by Differential Scanning Calorimetry (RIGAKU DENKI KOGYO products) under the following measurement conditions.

| | |
|---|---|
| Pre-treatment of test sample | none |
| Weight of test sample | about 10 mg |
| The rate of increase of temperature | $10^{\circ}$C/min. |
| Maximum temperature | $250^{\circ}$C |
| The rate of decrease of temperature | $10^{\circ}$C/min. |
| Atmosphere | a stream of nitrogen gas |

When measuring the temperature of the test sample with the above-mentioned device and measuring conditions, first of all the melting peak is recognized, and in the next step, the temperature is increased to $250^{\circ}$C and where it turns to decreasing temperature, the peak of crystallization is noted.

In the present invention, the temperature of crystallization is defined as the temperature at which said curve of crystallization is most distant from the base line. The crystallization temperature measured by this method indicates some variance according to the additives used.

It is preferred to use effective nucleating agents such as:

aromatic and saturated fatty di-carboxylic acid,

benzoic acid,

ring substituted benzoic acid,

alicyclic carboxylic acid and metal salt thereof, cynamoic anhydride,

thioglycolic anhydride,

p-toluene sulfonic acid,

talc,

sebacic acid,

aluminium hydroxide,

thio di-glycolic anhydride,

p-ter-butyl benzoic acid,

p-ter-butyl benzoate aluminium salt,

di-benzylidene sorbitol, and the like.

With these nucleating agents, the larger the amount added, the higher the temperature of crystallization becomes. Optimum results are obtained when these additives are applied to the composition only in an amount which increases the temperature of crystallization by more than $2^{O}C$.

When the temperature of crystallization was increased by less than $2^{O}C$, appreciable improvement in the cutting property of the film could not be achieved. The amount of nucleating agent required to increase the temperature of crystallization by more than $2^{O}C$ varies according to the nature of the nucleating agent, but the value is usually from 0.01 to 1.0 wt%.

In the present invention, following technique can be employed in order to improve the cutting property of the film. The polypropylene resin composition may contain polyethylene, of which the average molecular weight is less than 30,000 and more than 500, in an amount from 2 to 40 wt%.

The polyethylene used in the present invention comprises resin of average molecular weight less than 30,000 and more than 500, and may contain a copolymer or mixture of one or more other α-olefines. The average molecular weight can be determined by one of the several methods such as elevation of boiling point, or vapour pressure c.mometric method, but is not limited to any specific measuring method. So-called polyethylene wax, that has a molecular weight less than 5,000, is produced by a process called the emulsion method, and can also be included as a component of the polypropylene resin composition.  In this case, if the molecular weight of polyethylene wax is larger than 30,000, the mixture of resins have reduced compatibility, and in film production many slits occur in the film, so as to reduce its transparency.  On the other hand, if the molecular weight is less than 500, the film does not have practical utility because of the poor cutting property of the film.  The amount of polyethylene wax added leaves the cutting property of the film weak if less than 2 wt%, whereas if it is over 40 wt%, transparency, tackiness and its usefulness for electric microwave ovens is adversely affected.  Good results can be obtained when the amount of added polyethylene wax is from 2 to 40 wt%, and especially preferred is from 5 to 20 wt%.  Generally, polyethylene reduces the transparency of the film because of its poor compatibility with polypropylene, however, reducing the molecular weight improves compatibility and reduces the stress produced in cutting film with saw-teeth.  It was previously considered difficult to use conventional polypropylene as wrap film, but the reduction of the molecular weight of polyethylene enable its practical application for wrap film.

Production methods for conventional polypropylene can be employed in the film production from the present polypropylene resin composition.  For example, inflation film extrusion and T-die film extrusion can be used in processing the film.  The extrusion temperature is selected from 200 to 280$^{\circ}$C.  The polymer is extruded through a ring slit or plane slit, and may be quenched by water or on a cooling roller.  The thickness of the film, which may be the same as the thickness of conventional wrap film, is in the range from 7 to 20µ.

Self-tacking wrap film of the present invention has a good self-tackiness for the ordinary uses of wrap film, and especially for its use in electric microwave ovens it has low shrinkage on heating, while at high temperatures it is resistant to melting or whitening.

The following examples are intended to illustrate various embodiments of the present invention.


### EXAMPLE 1

Sample No.1 is a polypropylene resin composition (Mitsui Toatsu Chemicals, Inc. products, Mitsui Noblen GFL-G Trade Mark), having a residue of extraction adjusted to 93 wt%. Film is produced on a T-tie film extrusion machine as described below, at a thickness of 13μ.

| | |
|---|---|
| Bore diameter | 65 mm |
| Screw | full flight type |
| L/D | 25 |
| Die | 900 mm slit width |
| Extrusion temperature | 250°C |
| Screw speed | 60 rpm |
| Take-off speed | 60 m/min |
| Quenching | Cooling by water |

The haze of sample No.1 film is 1.5% and the film is colourless and transparent, having good tackiness with a china tray. 140°C is the temperature in the method of measuring applicability of the material for use in an electric microwave oven.

The method of measuring applicability for electric microwave oven use is as follows. Paper is put on both sides of a sample strip of film of 3 cm width by 14 cm length, at a point 2.5 cm from each end, and a weight of 10 g is hung on one end. The maximum ambient temperature is indicated every 10°C. The result of the test is indicated as to whether or not the film breaks within one hour at each 10°C rise.

## EXAMPLE 2

Sample No.2 of the present invention is similar to that described in Example 1, but the residue of extraction is adjusted to 75%. Film is produced on the T-die extrusion machine described in Example 1, to a thickness of 10μ.

The haze of the sample No.2 film is 1.3% and the film is colourless and transparent, having a good tackiness with a china tray, as described in Example 1. 130$^{\circ}$C is the temperature obtained in the method for measuring the applicability for electric microwave oven use.

## EXAMPLE 3

Sample No.3 of the present invention is a polypropylene resin composition which is a terpolymer of ethylene-butane-propylene random copolymer with 0.1 wt% BHT as a stabilizer and additionally 1 wt% glycerol stearate. After mixing, melted resin is extruded at 220$^{\circ}$C in conventional manner, and pelletized. The residue of extraction is adjusted to 40 wt%. A film sample from this resin is produced on an inflation extrusion machine described below, at a thickness of 10μ.

| | |
|---|---|
| Bore diameter | 40 mm |
| Screw | full flight type |
| L/D | 22 |
| Die | 20 cm diameter |
| Flattened tube width | 35 cm |
| Extrusion temperature | 210$^{\circ}$C |
| Screw speed | 40 rpm |
| Take-off speed | 20 mm/min |
| Quenching | Cooling by water |

The haze of sample No.3 is 1.1%, and the film is colourless and transparent having better tackiness with a china tray than samples 1 and 2. 120$^{\circ}$C is the temperature obtained in the method for measuring applicability for electric microwave oven use. Blocking has not been observed under high temperature storage conditions.

### EXAMPLE 4

Sample No.4 film of the present invention is a mixture of the polypropylene resin composition described in Example 1 and 15 wt% atactic polypropylene, and additionally 0.1 wt% N, N-bis (2-hydroxy ethyl) stearic amine produced by the same method as Example 3 and formed as pellets which are adjusted to a residue of extraction of 60 wt%. A film sample of this resin is produced on an inflation extrusion machine as described in Example 3, at a thickness of 10µ. The haze of sample No.4 is 1.2% and the film is colourless and transparent having better tackiness with a china tray. 120°C is the temperature obtained in the method for measuring applicability for electric microwave oven use. Blocking has not been observed under high temperature storage conditions.

### EXAMPLE 5

Sample No.5 film is a mixture of the polypropylene resin composition described in Example 1 and 10 wt% hydrogenated petroleum resin, and additionally 10 wt% sorbitan stearate, produced by the same method as Example 3 and formed into pellets which are adjusted to a residue of extraction of 85 wt%. A sample of this resin is produced by the T-die film extrusion machine as described in Example 1, at a thickness of 12µ. The haze of sample No.5 is 1.3% and the film is colourless and transparent having tackiness with a china tray as good as sample No.3. 120°C is the temperature obtained in the method for measuring applicability for electric microwave oven use. Blocking has not been observed under high temperature storage conditions.

0047634

## EXAMPLE 6

Sample No.6 is a mixture of polypropylene resin composition (Mitsui Toatsu Chemicals, Inc. products, Mitsui Noblen, FL-G Trade Mark) and additional 1wt% atactic polypropylene, produced by the same method as Example 3 and formed into pellets which are adjusted to a residue of extraction of 95 wt%. A sample of this resin is produced by the T-die film extrusion machine as described in Example 1, at the thickness of 10μ. The haze of the sample No.6 is 1.4% and the film is colourless and transparent having a little tackiness with a china tray, less than that of sample No.1, but capable of practical usage. $140^{O}C$ is the temperature obtained in the method for measuring applicability for measuring electric microwave oven use.

## COMPARATIVE EXAMPLE 1

Comparative sample No.1 is similar to the sample No.6 of Example 6 except that atactic polypropylene is not added, and it has a residue of extraction with n-heptane of 96 wt%. Film is produced as described in Example 6, at a thickness of 13μ. The haze of the comparative sample No.1 is 1.5% and the film is colourless and transparent, having not such good tackiness with a china tray.

$140^{O}C$ is the temperature obtained in the method for measuring applicability for electric microwave oven use. Blocking has not been observed under high temperature storage conditions.

## COMPARATIVE EXAMPLE 2

Comparative sample No.2 is a mixture of 30 wt% atactic polypropylene and additionally 1.0 wt% polyoxyethylene glycerol stearic ester. It is made by the same method as in Example 3 and formed into pellets which are adjusted to a residue of extraction of 28 wt%.

The haze of the comparative sample No.2 is 1.3% and the film is colourless and transparent, having good tackiness with a china tray. However applicability is not recognized because the temperature obtained in the method of measuring the applicability for electric microwave is 100°C.

## EXAMPLE 7

Pellets are obtained by the same method as in Example 1 from the polypropylene resin composition used in Example 1 to which have been added 0.2 wt% thio-di-glycolic anhydride. The temperature of crystallization is 108°C as compared with the temperature of crystallization of 106°C for the composition having no thioglycolic anhydride. Sample No.7 film is produced from these pellets by the inflation film extrusion process as in Example 3. The haze of sample No.7 is 1.2%. The film is colourless and transparent having good tackiness. A cutting test is performed with a conventional case having ordinary saw teeth (the case is made from coated paper board of 500 g/m$^2$, with saw teeth formed in a steel plate of 0.2 mm thickness). As a result, it is found that the film is cut by light tension against the saw teeth. The cut edge is straight, and at right-angles to the side edge of the film.

## EXAMPLE 8

Pellets are obtained by the same mixture of resin but without thioglycolic anhydride, and including 10 wt% polyethylene wax having an average molecular weight of 2,000. Sample No.8 film is prepared from these pellets by the same method described in Example 7, at a thickness of 14μ. The haze of the sample No.8 is 1.1%. The film is colourless and transparent and has good tackiness. The cutting test is performed as with Example 7. As a result, it is found that the film is cut with a straight cut edge
and at right-angles to the side edge of the film.

CLAIMS:

1.    Self-tacking wrap film suitable for electric microwave oven use characterized in that the film is made from a polypropylene resin composition as the main material, and having a residue of extraction with n-heptane of from 95 wt% to 30 wt%.

2.    Self-tacking wrap film according to claim 1 wherein the polypropylene resin composition contains at least one additive for improving the properties of the material.

3.    Self-tacking wrap film according to claim 2 wherein the improving material is a surfactant for inhibiting blocking.

4.    Self-tacking wrap film according to claim 2 or claim 3 wherein the improving material is a nucleating agent which increases the crystallizing temperature of the polypropylene resin composition by more than $2^{O}C$.

5.    Self-tacking wrap film according to claim 2, claim 3 or claim 4 wherein the improving material is polyethylene having an average molecular weight of from 500 to 30,000.

| Category | Citation of document with indication, where appropriate, of relevant passages | Relevant to claim |
|---|---|---|
| X | FR - A - 2 323 751 (MITSUBISHI CHEMICAL) | 1-5 |
| | * page 1, line 5 - page 7, line 6 * | |
| | & GB - A - 1 516 420 | |
| | --- | |
| | BE - A - 836 750 (ETAFIN) | 1,2 |
| | * claims 1-6 * | |
| | --- | |
| | DE - A - 2 756 486 (BASF) | 1 |
| | * page 2, lines 1-32 * | |
| | --- | |
| | DE - A - 2 756 614 (BASF) | 1 |
| | * page 2, lines 1-29 * | |
| | --- | |
| | AT - A - 292 298 (ÖSTERREICHISCHE STICKSTOFFWERKE) | 4,5 |
| | * page 1, lines 14-34 * | |
| | ---------- | |

## DOCUMENTS CONSIDERED TO BE RELEVANT

**CLASSIFICATION OF THE APPLICATION (Int. Cl.³)**

C 08 L 23/10

**TECHNICAL FIELDS SEARCHED (Int. Cl.³)**

C 08 L 23/00
C 08 J 5/18

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 11-12-1981 | GOOVAERTS |

EPO Form 1503.1 06.78